# EUROPEAN PATENT SPECIFICATION

(11) **EP 3 239 642 B1**
(45) Date of publication and mention of the grant of the patent: **01.07.2020**
(21) Application number: 17151207.2
(22) Date of filing: 12.01.2017
(51) Int. Cl.: F28F 7/02, F28F 9/02, F28F 13/08, F28D 7/16, F28F 1/02, F28F 1/04, F28F 1/32, B23P 15/26, F28F 3/08

(54) **HEAT EXCHANGERS**
WÄRMETAUSCHER
ÉCHANGEURS THERMIQUES

(30) Priority: 15.01.2016 US 201614996441
(43) Date of publication of application: 01.11.2017
(73) Proprietor: Hamilton Sundstrand Corporation, Charlotte, NC 28217 (US)
(72) Inventor: RANJAN, Ram, West Hartford, CT Connecticut 06117 (US); ST. ROCK, Brian, Andover, CT Connecticut 06232 (US); HERRING, Neal R., East Hampton, CT Connecticut 06424 (US)
(74) Representative: Dehns

(56) References cited:
- EP-A2- 2 246 539
- WO-A1-2015/063875
- WO-A1-2015/105958
- CN-A- 101 294 779
- CN-Y- 201 266 043

## Description

### BACKGROUND

### 1. Field

The present disclosure relates to heat exchangers, according to the preamble of claim 1. EP 2 246 539 A2 shows such heat exchanger.

### 2. Description of Related Art

Conventional multi-layer sandwich cores are constructed out of flat sheet metal dividing plates, spacing bars, and two dimensional thin corrugated fins brazed together. The fabrication process is well established and relatively simple. However, the manufacturing simplicity has a negative impact on the performance and limits the ability to control thermal efficiency.

Such conventional methods and systems have generally been considered satisfactory for their intended purpose. However, there is still a need in the art for improved heat exchangers. The present disclosure provides a solution for this need. CN 201266043 Y relates to a punching type heat exchange fin.

### SUMMARY

The invention relates to a heat exchanger, as described in claim 1.

The first flow openings can be circular or any other suitable shape. The second flow openings can be polygonal or any other suitable shape. The first flow openings and second flow openings can be arranged in a checkerboard pattern.

The first and/or second flow openings change in size or shape between sheets such that the first and/or second flow channels include a changing flow area along a length of the body. In certain embodiments, the changing flow area can increase a first flow area toward a first flow outlet of the heat exchanger. The changing flow area can decrease a second flow area toward the first flow outlet as the first flow area increases. In certain embodiments, the first and/or second flow channels include a changing flow area shape.

The heat exchanger can include one or more first channel tubes inserted through a plurality of aligned first flow openings of the plurality of sheets to form the first flow channel. In certain embodiments, the first channel tubes can include a circular cross-section. The first channel tubes can be pinched together to form an inlet header and/or an outlet header outside of the body. The heat exchanger can further include one or more second channel tubes inserted through a plurality of aligned second flow openings of the plurality of sheets to form the second flow channels. The second channel tubes can be pinched together similarly to the first channel tubes.

The invention relates also to a method for manufacturing a heat exchanger, as described in claim 9.

The method can further include stamping the first and/or second flow openings into each sheet. In certain embodiments, the method can further include inserting one or more first flow tubes through aligned first flow openings to form the first flow channels. The method can further include joining the first flow tubes together at one or both ends to form an inlet header and/or outlet header. The method can further include placing the plurality of sheets and joined flow tubes in a heat exchanger casing having inlets and outlets for both hot and cold flow.

These and other features of the systems and methods of the subject disclosure will become more readily apparent to those skilled in the art from the following detailed description taken in conjunction with the drawings.

### BRIEF DESCRIPTION OF THE DRAWINGS

So that those skilled in the art to which the subject disclosure appertains will readily understand how to make and use the devices and methods of the subject disclosure without undue experimentation, embodiments thereof will be described in detail herein below with reference to certain figures, wherein:
Fig. 1A is a perspective view of an embodiment of a heat exchanger in accordance with this disclosure, showing a hot flow inlet/cold flow outlet of the heat exchanger;
Fig. 1B is a perspective cross-sectional view of the heat exchanger of Fig. 1A, showing a middle portion of the heat exchanger;
Fig. 1C is a cross-sectional view of the heat exchanger of Fig. 1A taken toward an opposite end as that shown in Fig. 1A, showing a hot flow outlet/cold flow inlet of the heat exchanger;
Fig. ID is a scaled up view of a portion of the heat exchanger of Fig. 1A;
Fig. 2 is a cross-sectional view of an embodiment of a heat exchanger in accordance with this disclosure;
Fig. 3A is a perspective partially exploded view of an embodiment of a heat exchanger in accordance with this disclosure, depicting an embodiment of a method of assembly in accordance with this disclosure;
Fig. 3B is a plan view of the embodiment of Fig. 3A;
Fig. 3C is a side elevation view of the embodiment of Fig. 3A;
Fig. 4 is a schematic view of an embodiment of a heat exchanger in accordance with this disclosure; and
Fig. 5 is a schematic view of an embodiment of a heat exchanger in accordance with this disclosure.

### DETAILED DESCRIPTION

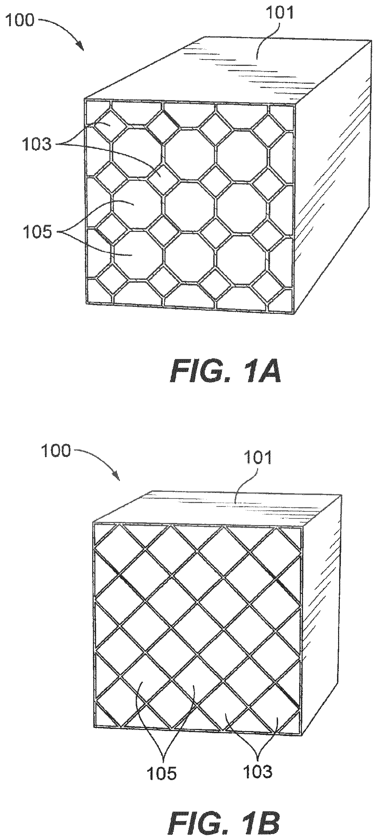

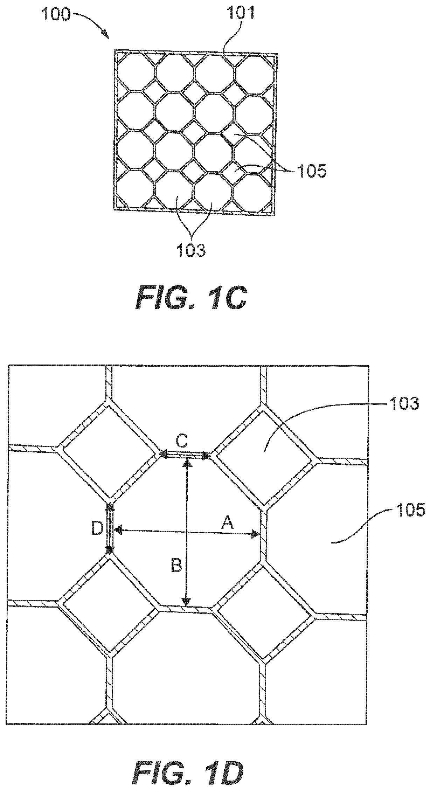

Reference will now be made to the drawings wherein like reference numerals identify similar structural features or aspects of the subject disclosure. For purposes of explanation and illustration, and not limitation, an illustrative view of an embodiment of a heat exchanger in accordance with the disclosure is shown in Fig. 1A and is designated generally by reference character 100. Other embodiments and/or aspects of this disclosure are shown in Figs. 1B-5. The systems and methods described herein can be used to reduce weight and/or increase performance of heat transfer systems.

Referring to Fig. 1A, a heat exchanger 100 includes a body 101, a plurality of first flow channels, e.g., hot flow channels 103 as described herein, defined in the body 101, and a plurality of second flow channels, e.g., cold flow channels 105 as described herein, defined in the body 101. While hot flow channels 103 and the cold flow channels 105 are described with respect to a relative temperature of flow therein, it is contemplated that the hot flow channels 103 can be used for cold flow and vice versa, or any other suitable arrangement.

The cold flow channels 105 are fluidly isolated from the hot flow channels 103. At least one of the hot flow channels 103 or the cold flow channels 105 can include a changing characteristic along a length of the body 101. However, it is contemplated that the flow channels 103, 105 can have constant characteristics along the length of the body 101.

The hot flow channels 103 and the cold flow channels 105 can be utilized in a counterflow arrangement such that cold flow and hot flow are routed through the heat exchanger 100 in opposing directions. It is contemplated, however, that the flow channels 103, 105 can be used in a parallel flow arrangement. Also, as shown, the hot flow channels 103 and the cold flow channels can be arranged such that hot and cold channels 103, 105 alternate (e.g., in a checkerboard pattern as shown).

The flow channel 103, 105 can include shapes such as one or more of rhombuses, hexagons, and octagons. However, while the flow channels 103, 105 are shown as polygons, the shapes need not be polygonal or rectilinear. As appreciated by those skilled in the art, polygonal shapes can be described using the four parameters as described below. In Fig. ID, the four parameters are shown. As shown, the full width A and height B are always greater than zero. The secondary width C and height D can be zero up to the full width and height. If C>0 and D>0, the shape is an octagon, if C>0 and D=0 (or C=0 and D>0), the shape is a hexagon, and if C=0 and D=0, the shape is a rhombus.

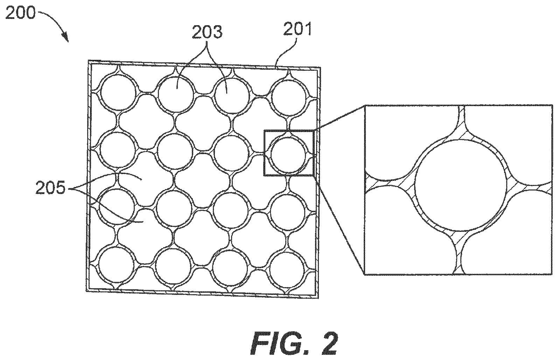

Any other suitable flow area shapes for the hot flow channels 103 and/or the cold flow channels 105 are contemplated herein. For example, as shown in Fig. 2, a heat exchanger 200 can include elliptical flow channels 203 and/or non-elliptical flow channels 205 (e.g., rounded cross shaped) defined in body 201. Any suitable elliptical shapes for channels 203 or any suitable non-elliptical shapes for flow channels 205 are contemplated herein.

As shown in Figs. 1A, 1B, and 1C, one or more flow channels 103, 105 can include characteristics that change over a length of the body 101 in the direction of flow through the body 101. These characteristics can include a flow area. For example, the flow area of channels 103 can increase toward a hot flow outlet (e.g., an end as shown in Fig. 1C) of the heat exchanger 100 (e.g., as shown in transitioning from Fig. 1A, through Fig. 1B, to Fig. 1C). Similarly, the flow area of channels 105 can decrease toward the hot flow outlet (e.g., an end as shown in Fig. 1C) as the area of the channels 103 increases (which may be a function of the increasing hot flow area in order to maintain total area of the body 101). It is contemplated that one or more of the hot flow channels 103 or the cold flow channels 105 may maintain a constant flow area or change in any other suitable manner.

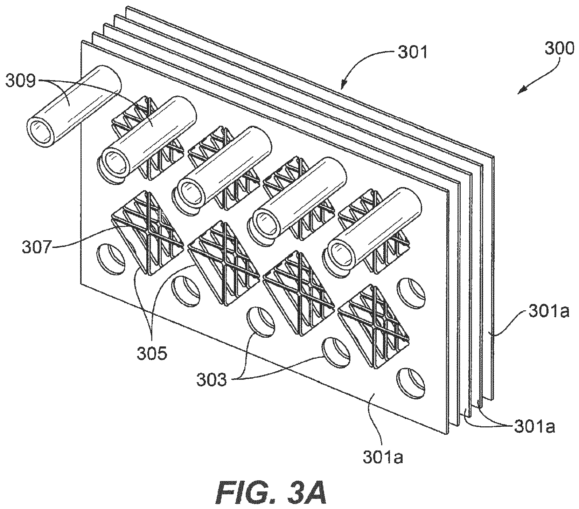

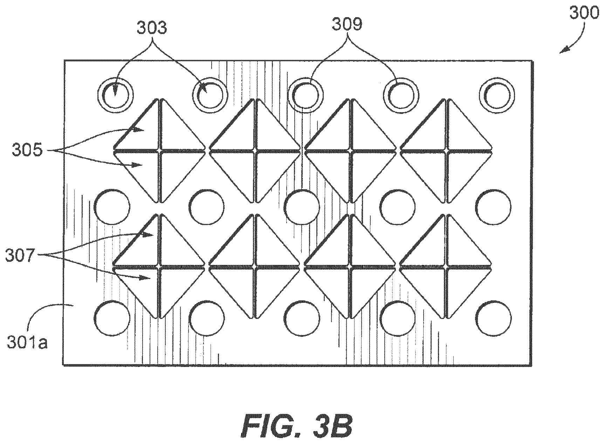

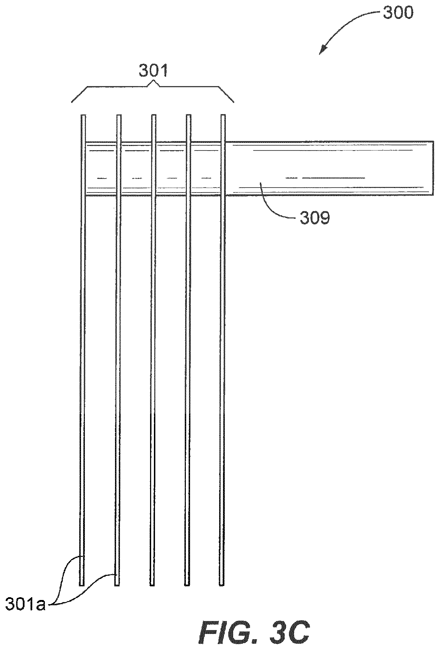

In certain embodiments, the changing characteristic of the hot and/or cold flow channels 103, 105 can include a changing flow area shape. In certain embodiments, the changing flow area shape can include a first polygonal flow area at a hot flow inlet (e.g., a rhombus as shown in Figs. 1A and 1B) which transitions to a second polygonal flow area having more sides at a hot flow outlet (e.g., a hexagon as shown in Fig. 3). Also as shown, the changing flow area shape can include a first polygonal flow area at a cold flow inlet (e.g., a rhombus as shown in Figs. 1C and 1B) which transitions to a second polygonal flow area having more sides at a cold flow outlet (e.g., a hexagon as shown in Fig. 1A). Any other suitable changing shape along a length of the body 101 is contemplated herein (e.g., any desired change of A, B, C, and/or D as shown in Fig. ID).

The body 101 or any components thereof (e.g., sheets 301a) can be made of metal and/or any other suitable material. For example, the body 101 can be made of a plastic or other suitable insulator material.

Referring additionally to Figs. 3A-3C, an embodiment of a heat exchanger 300 can include a plurality of sheets 301a disposed together to form a body 301, each sheet comprising a plurality of hot flow openings 303 and a plurality of cold flow openings 305. A plurality of hot flow channels 103 (e.g., as shown in Fig. 1A-1C) are defined in the body 301 by fluid communication of the plurality of hot flow openings 303, and a plurality of cold flow channels 105 (e.g., as shown in Fig. 1A-1C) are defined in the body 301 by the fluid communication of the plurality of cold flow openings 305. As described above, the cold flow channels 105 are fluidly isolated from the hot flow channels 103.

The hot flow openings 303 can be circular or any other suitable shape (e.g., elliptical or otherwise to create hot flow channels 103 as described above). The cold flow openings 305 can be polygonal (e.g., rhombus shaped) or any other suitable shape to create cold flow channels 105 as described above. As shown, the hot flow openings 303 and cold flow openings 305 can be arranged in an alternating pattern (e.g., a checkerboard pattern).

While the plurality of sheets 301a are shown as having openings 303, 305 of constant shape between each sheet 301a, the hot and/or cold flow openings 303, 305 can change in size or shape between sheets 301a such that the hot and/or cold flow channels 103, 105 can include a changing flow area/shape along a length of the body 301 as described above.

In certain embodiments, the cold flow openings 305 can be created to include one or more members 307 (e.g., fins). However, it is contemplated that members 307 may not be included on one or more of the cold flow openings 305. While the members 307 are shown as aligning (e.g., to form fins), it is contemplated that one or more of the members 307 may not align with one or more members 307 of other sheets 301a. This can allow fluid mixing and/or create turbulence that may increase heat transfer between the fluid and the sheets 301a.

As shown, the heat exchanger 300 can include one or more hot channel tubes 309 inserted through a plurality of aligned hot flow openings 303 of the plurality of sheets 301a to form the hot flow channel 103. In certain embodiments, the hot channel tubes 309 can include a circular cross-section, however, any other suitable shape for tube 309 is contemplated herein (e.g., square, elliptical) and can be selected to match the shape of the hot flow openings 303.

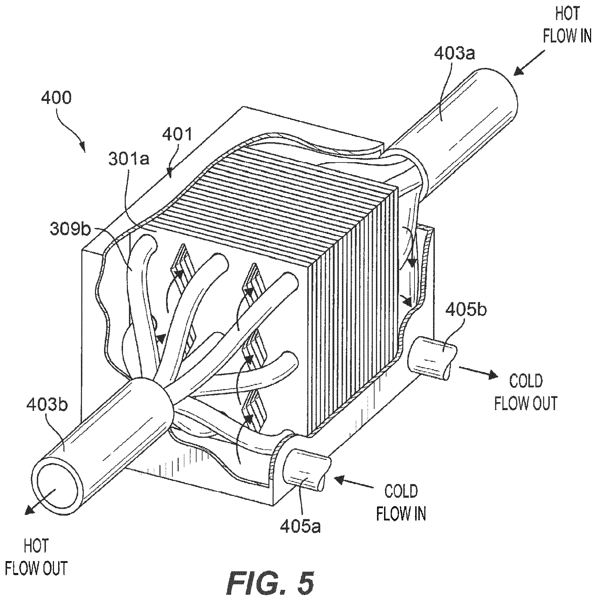

The sheets 301a can be adhered to the hot channel tubes 309, e.g., via brazing or any other suitable manner. Also, while the sheets 301a are shown as having separation between each sheet 301a, the sheets 301a can be disposed together such that there are no spaces between each sheet 301a (e.g., such that body 301 is solid as shown in Fig. 5). For example, each sheet 301a can be brazed or otherwise connected together flushly face to face, with or without the hot channel tubes 309. While hot channel tubes 309 are described herein, it is contemplated that the heat exchanger 300 can additionally or alternatively include cold channel tubes.

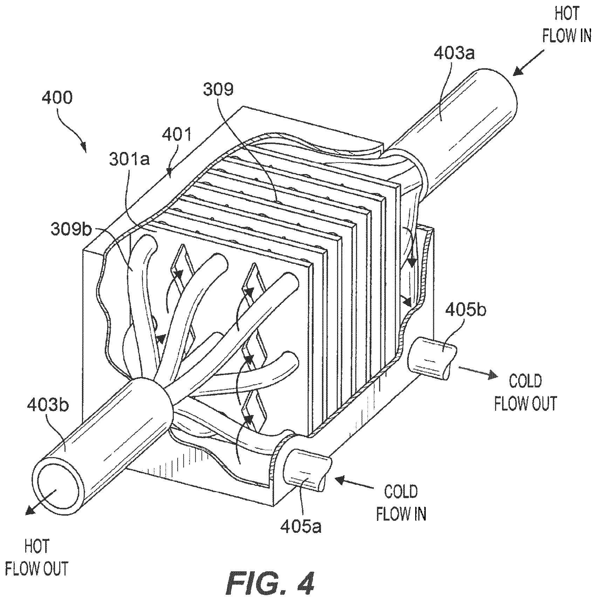

Referring additionally to Figs. 4 and 5, the hot channel tubes 309 can be converged (e.g., pinched) together to form an inlet header 309a and/or an outlet header 309b outside of the body 301. As shown in Fig. 4, a heat exchanger 400 includes body 301 disposed in a casing 401 having a hot flow inlet 403a, a hot flow outlet 403b, a cold flow inlet 405a, and a cold flow outlet 405b. The hot flow inlet 403a is in fluid communication with the inlet header 309a such that hot flow can travel from a source (e.g., a round tube) to each of the hot channel tubes 309. The hot flow outlet 403b is in fluid communication with the outlet header 309b such that hot flow can travel out of the outlet header 309b in into an outlet sink (e.g., back into circulation in the case of a coolant).

As shown, a cold flow can travel in through the cold flow inlet 405a, through the cold flow openings 305 which form cold flow channels 105, and out through the cold flow outlets 405b. The cold flow inlet/outlet 405a, 405b can be located on a side of the casing 401, whereas the hot flow inlet/outlet 403a, 403b can be located on an end of the casing 401 as shown in Fig. 4. Any other suitable inlet/outlet arrangement is contemplated herein. For example, the cold flow inlet 405a and outlet 405b can be placed on any side or the cold flow can be allowed to pass through the heat exchanger 300, 400 from one side to the other, e.g., in a RAM fan duct. Also, it is contemplated that the cold flow openings 305 can include one or more cold flow tubes (not shown) similar to the hot flow tubes 309, but utilized for cold flow, instead of an open area exposed to a single inlet 405a and outlet 405b.

A method for manufacturing a heat exchanger 300, 400 includes aligning a plurality of hot flow openings 303 and cold flow openings 305 defined in a plurality of sheets 301a, and attaching the plurality of sheets 301a together to form a plurality of hot flow channels 103 from the aligned hot flow openings 303 and a plurality of cold flow channels 105 from the aligned cold flow openings 305. Attaching the plurality of sheets 103a together can include brazing the sheets 103a together.

The method can further include stamping the hot and/or cold flow openings 303, 305 into each sheet 301a. In certain embodiments, the method can further include inserting one or more hot flow tubes 309 through aligned hot flow openings 303 to form the hot flow channels 103. The method can further include joining (e.g., pinching or any other suitable method) the hot flow tubes 309 together at one or both ends to form an inlet header 309a and/or outlet header 309b (e.g., after stack-up of the sheets 301a or after the sheets 301a have been brazed together to form the core as shown in Fig. 5). In certain embodiments, the tubes 309 can be joined (e.g., pinched) together to converge to a circular pattern which can be connected to the hot side circular inlet/pipe.

Embodiments of this disclosure can allow maximization of primary surface area for heat exchange while allowing flexibility to increase or decrease the ratio of hot side to cold side flow area. Being able to change the relative amount of flow area on each side of the heat exchanger is necessary to fully utilize the pressure drop available on each side. Embodiments as described above allow for enhanced control of flow therethrough, a reduction of pressure drop, control of thermal stresses, easier integration with a system, and reduced volume and weight. Unlike conventional multi-layer sandwich cores, embodiments as described above allow for channel size adjustment for better flow impedance match across the core.

As described above, certain embodiments of the heat exchanger 100, 200, 300, 400 can be constructed out of stamped sheets and tube bundles which can be a simple and low-cost manufacturing method. Also, higher temperature operation can be made possible using circular or otherwise elliptical channel construction for the hot flow channels (e.g., due to circular channels, hoop stresses can survive higher pressures and temperatures associated with hot flow in a high temperature system).

The methods and systems of the present disclosure, as described above and shown in the drawings, provide for heat exchangers with superior properties including reduced weight and/or increased efficiency. While the apparatus and methods of the subject disclosure have been shown and described with reference to embodiments, those skilled in the art will readily appreciate that changes and/or modifications may be made thereto without departing from the scope of the invention as defined by the claims.

## Claims

1. A heat exchanger, comprising:
a plurality of sheets (301a) disposed together to form a body (301), each sheet comprising a plurality of first flow openings (303) and a plurality of second flow openings (305);
a plurality of first flow channels (103) defined in the body by fluid communication of the plurality of first flow openings; and
a plurality of second flow channels (105) defined in the body by fluid communication of the plurality of second flow openings, the second flow channels being fluidly isolated from the first flow channels; wherein the first and/or second flow openings change in size or shape between sheets such that the first and/or second flow channels include a changing flow area along a length of the body; **characterised in that** the changing flow area shape including a first polygonal flow area at a cold flow inlet transitioning to a second polygonal flow area at a cold flow outlet having more sides than the first polygonal flow area.

2. The heat exchanger of claim 1, wherein the first flow openings are circular, and/or wherein the second flow openings are polygonal; and/or wherein the first flow openings and second flow openings are arranged in a checkerboard pattern.

3. The heat exchanger of any preceding claim, wherein the changing flow area increases a first flow area toward a first flow outlet of the heat exchanger.

4. The heat exchanger of claim 3, wherein the changing flow area decreases a second flow area toward the first flow outlet as the first flow area increases.

5. The heat exchanger of claim 4, wherein the first and/or second flow channels include a changing flow area shape.

6. The heat exchanger of any preceding claim, further comprising one or more first channel tubes (309) inserted through a plurality of aligned first flow openings of the plurality of sheets to form the first flow channel.

7. The heat exchanger of claim 6, wherein a plurality of the one or more first channel tubes are in fluid communication outside of the body.

8. The heat exchanger of any preceding claim, further comprising one or more second channel tubes inserted through a plurality of aligned second flow openings of the plurality of sheets to form the second flow channel.

9. A method for manufacturing a heat exchanger, according to any claim 1-8, comprising;
aligning a plurality of first flow openings and second flow openings defined in a plurality of sheets; and
attaching the plurality of sheets together to form a plurality of first flow channels from the aligned first flow openings and a plurality of second flow channels from the aligned second flow openings;
changing the size or shape of the first and/or second flow openings between sheets such that the first and/or second flow channels include a changing flow area along a length of the body; and such that the changing flow area shape includes a first polygonal flow area at a cold flow inlet transitioning to a second polygonal flow area at a cold flow outlet having more sides than the first polygonal flow area.

10. The method of claim 9, wherein attaching the plurality of sheets together includes brazing the sheets together.

11. The method of claim 9 or 10, further comprising stamping the first and/or second flow openings into each sheet.

12. The method of claim 9, 10 or 11, further comprising inserting one or more first flow tubes through aligned first flow openings to form the first flow channels.

13. The method of any of claims 9 to 12, further comprising joining the first flow tubes together at one or both ends to form an inlet header and/or outlet header.

14. The method of claim 13, further comprising placing the plurality of sheets and joined flow tubes in a heat exchanger casing having inlets and outlets for both hot and cold flow.

## Patentansprüche

1. Wärmetauscher, der Folgendes umfasst:
eine Vielzahl von Blechen (301a), die zusammen angeordnet sind, um einen Körper (301) zu bilden, wobei jedes Blech eine Vielzahl von ersten Strömungsöffnungen (303) und eine Vielzahl von zweiten Strömungsöffnungen (305) umfasst;
eine Vielzahl von ersten Strömungskanälen (103), die in dem Körper über eine Fluidverbindung der Vielzahl von ersten Strömungsöffnungen definiert sind; und
eine Vielzahl von zweiten Strömungskanälen (105), die in dem Körper über eine Fluidverbindung der Vielzahl von zweiten Strömungsöffnungen definiert sind, wobei die zweiten Strömungskanäle fluidisch von den ersten Strömungskanälen isoliert sind; wobei
sich die ersten und/oder zweiten Strömungsöffnungen in Größe oder Form zwischen Blechen derart ändern, dass die ersten und/oder zweiten Strömungskanäle eine sich ändernde Strömungsfläche entlang einer Länge des Körpers beinhalten; **dadurch gekennzeichnet, dass** die sich ändernde Strömungsflächenform eine erste polygonale Strömungsfläche an einem Kaltströmungseinlass beinhaltet, die zu einer zweiten polygonalen Strömungsfläche an einem Kaltströmungsauslass übergeht, die mehr Seiten als die erste polygonale Strömungsfläche aufweist.

2. Wärmetauscher nach Anspruch 1, wobei die ersten Strömungsöffnungen rund sind und/oder wobei die zweiten Strömungsöffnungen polygonal sind; und/oder wobei die ersten Strömungsöffnungen und die zweiten Strömungsöffnungen in einem Schachbrettmuster angeordnet sind.

3. Wärmetauscher nach einem der vorhergehenden Ansprüche, wobei die sich ändernde Strömungsfläche eine erste Strömungsfläche zu einem ersten Strömungsauslass des Wärmetauschers vergrößert.

4. Wärmetauscher nach Anspruch 3, wobei die sich ändernde Strömungsfläche eine zweite Strömungsfläche zu dem ersten Strömungsauslass verringert, während sich die erste Strömungsfläche vergrößert.

5. Wärmetauscher nach Anspruch 4, wobei die ersten und/oder zweiten Strömungskanäle eine sich ändernde Strömungsflächenform beinhalten.

6. Wärmetauscher nach einem der vorhergehenden Ansprüche, der ferner ein oder mehrere erste Kanalrohre (309) umfasst, die durch eine Vielzahl von ausgerichteten ersten Strömungsöffnungen der Vielzahl von Blechen eingeführt sind, um den ersten Strömungskanal zu bilden.

7. Wärmetauscher nach Anspruch 6, wobei eine Vielzahl des einen oder der mehreren ersten Kanalrohre in Fluidverbindung außerhalb des Körpers stehen.

8. Wärmetauscher nach einem der vorhergehenden Ansprüche, der ferner ein oder mehrere zweite Kanalrohre umfasst, die durch eine Vielzahl von ausgerichteten zweiten Strömungsöffnungen der Vielzahl von Blechen eingeführt sind, um den zweiten Strömungskanal zu bilden.

9. Verfahren zum Herstellen eines Wärmetauschers nach einem der Ansprüche 1-8, das Folgendes umfasst:
Ausrichten einer Vielzahl von ersten Strömungsöffnungen und zweiten Strömungsöffnungen, die in einer Vielzahl von Blechen definiert sind; und
Befestigen der Vielzahl von Blechen aneinander, um eine Vielzahl von ersten Strömungskanälen aus den ausgerichteten ersten Strömungsöffnungen und eine Vielzahl von zweiten Strömungskanälen aus den ausgerichteten zweiten Strömungsöffnungen zu bilden;
Ändern der Größe oder Form der ersten und/oder zweiten Strömungsöffnungen zwischen Blechen derart, dass die ersten und/oder zweiten Strömungskanäle eine sich ändernde Strömungsfläche entlang einer Länge des Körpers beinhalten; und derart, dass die sich ändernde Strömungsflächenform eine erste polygonale Strömungsfläche an einem Kaltströmungseinlass beinhaltet, die zu einer zweiten polygonalen Strömungsfläche an einem Kaltströmungsauslass übergeht, die mehr Seiten als die erste polygonale Strömungsfläche aufweist.

10. Verfahren nach Anspruch 9, wobei das Befestigen der Vielzahl von Blechen aneinander ein Hartlöten der Bleche aneinander beinhaltet.

11. Verfahren nach Anspruch 9 oder 10, das ferner ein Stanzen der ersten und/oder zweiten Strömungsöffnungen in jedes Blech umfasst.

12. Verfahren nach Anspruch 9, 10 oder 11, das ferner ein Einführen eines oder mehrerer erster Strömungsrohre durch ausgerichtete erste Strömungsöffnungen umfasst, um die ersten Strömungskanäle zu bilden.

13. Verfahren nach einem der Ansprüche 9 bis 12, das ferner ein Verbinden der ersten Strömungsrohre miteinander an einem oder beiden Enden umfasst, um einen Einlassverteiler und/oder einen Auslassverteiler zu bilden.

14. Verfahren nach Anspruch 13, das ferner ein Platzieren der Vielzahl von Blechen und verbundenen Strömungsrohren in einem Wärmetauschergehäuse umfasst, das Einlässe und Auslässe für sowohl warme als auch kalte Strömung aufweist.

## Revendications

1. Échangeur thermique, comprenant :
une pluralité de feuilles (301a) disposées ensemble pour former un corps (301), chaque feuille comprenant une pluralité de premières ouvertures d'écoulement (303) et une pluralité de secondes ouvertures d'écoulement (305) ;
une pluralité de premiers canaux d'écoulement (103) définis dans le corps par une communication fluidique de la pluralité de premières ouvertures d'écoulement ; et
une pluralité de seconds canaux d'écoulement (105) définis dans le corps par une communication fluidique de la pluralité de secondes ouvertures d'écoulement, les seconds canaux d'écoulement étant isolés fluidiquement des premiers canaux d'écoulement ; dans
lequel les premières et/ou secondes ouvertures d'écoulement changent de taille ou de forme entre les feuilles de sorte que les premiers et/ou seconds canaux d'écoulement comportent une zone d'écoulement changeante sur une longueur du corps ; **caractérisé en ce que** la forme de zone d'écoulement changeante comporte une première zone d'écoulement polygonale au niveau d'une entrée d'écoulement froid en transition vers une seconde zone d'écoulement polygonale au niveau d'une sortie d'écoulement froid ayant plus de côtés que la première zone d'écoulement polygonale.

2. Échangeur thermique selon la revendication 1, dans lequel les premières ouvertures d'écoulement sont circulaires, et/ou dans lequel les secondes ouvertures d'écoulement sont polygonales ; et/ou dans lequel les premières ouvertures d'écoulement et les secondes ouvertures d'écoulement sont agencées selon un motif en damier.

3. Échangeur thermique selon une quelconque revendication précédente, dans lequel la zone d'écoulement changeante augmente une première zone d'écoulement vers une première sortie d'écoulement de l'échangeur thermique.

4. Échangeur thermique selon la revendication 3, dans lequel la zone d'écoulement changeante diminue une seconde zone d'écoulement vers la première sortie d'écoulement lorsque la première zone d'écoulement augmente.

5. Échangeur thermique selon la revendication 4, dans lequel les premiers et/ou seconds canaux d'écoulement comportent une forme de zone d'écoulement changeante.

6. Échangeur thermique selon une quelconque revendication précédente, comprenant en outre un ou plusieurs premiers tubes de canal (309) insérés à travers une pluralité de premières ouvertures d'écoulement alignées de la pluralité de feuilles pour former le premier canal d'écoulement.

7. Échangeur thermique selon la revendication 6, dans lequel une pluralité des un ou plusieurs premiers tubes de canal sont en communication fluidique à l'extérieur du corps.

8. Échangeur thermique selon une quelconque revendication précédente, comprenant en outre un ou plusieurs seconds tubes de canal insérés à travers une pluralité de secondes ouvertures d'écoulement alignées de la pluralité de feuilles pour former le second canal d'écoulement.

9. Procédé de fabrication d'un échangeur thermique selon l'une quelconque des revendications 1 à 8, comprenant :
l'alignement d'une pluralité de premières ouvertures d'écoulement et de secondes ouvertures d'écoulement définies dans une pluralité de feuilles ; et
la fixation de la pluralité de feuilles ensemble pour former une pluralité de premiers canaux d'écoulement à partir des premières ouvertures d'écoulement alignées et une pluralité de seconds canaux d'écoulement à partir des secondes ouvertures d'écoulement alignées ;
le changement de la taille ou de la forme des premières et/ou secondes ouvertures d'écoulement entre les feuilles de sorte que les premiers et/ou seconds canaux d'écoulement comportent une zone d'écoulement changeante sur une longueur du corps ; et de sorte que la forme de zone d'écoulement changeante comporte une première zone d'écoulement polygonale au niveau d'une entrée d'écoulement froid en transition vers une seconde zone d'écoulement polygonale au niveau d'une sortie d'écoulement froid ayant plus de côtés que la première zone d'écoulement polygonale.

10. Procédé selon la revendication 9, dans lequel la fixation de la pluralité de feuilles ensemble comporte le brasage des feuilles ensemble.

11. Procédé selon la revendication 9 ou 10, comprenant en outre l'estampage des premières et/ou secondes ouvertures d'écoulement dans chaque feuille.

12. Procédé selon la revendication 9, 10 ou 11, comprenant en outre l'insertion d'un ou de plusieurs premiers tubes d'écoulement à travers les premières ouvertures d'écoulement alignées pour former les premiers canaux d'écoulement.

13. Procédé selon l'une quelconque des revendications 9 à 12, comprenant en outre la jonction des premiers tubes d'écoulement ensemble au niveau d'une ou des deux extrémités pour former un collecteur d'entrée et/ou un collecteur de sortie.

14. Procédé selon la revendication 13, comprenant en outre le placement de la pluralité de feuilles et de tubes d'écoulement joints dans un boîtier d'échangeur thermique ayant des entrées et des sorties pour un écoulement à la fois chaud et froid.
